# EUROPEAN PATENT APPLICATION

(11) **EP 4 589 874 A1**
(43) Date of publication of application: **23.07.2025**
(21) Application number: 22958507.0
(22) Date of filing: 16.09.2022
(51) Int. Cl.: H04L 5/00

(54) **SIDELINK COMMUNICATION METHOD, APPARATUS AND COMMUNICATION DEVICE**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2022/119434
(87) International publication number: WO 2024/055317

(57) **Abstract**

Provided in the present disclosure are a sidelink communication method, a communication apparatus and a communication device. The method can comprise: when all Tx profiles associated with a first destination address correspond to compatible carrier aggregation, determining that the first destination address is compatible with carrier aggregation; and when at least one Tx profile associated with the first destination address corresponds to incompatible carrier aggregation, determining that the first destination address is incompatible with carrier aggregation, wherein the first destination address is a destination address of a first service, and the first service is a broadcast service or a multicast service.

## Description

### TECHNICAL FIELD

The present disclosure relates to the technical field of wireless communication, and more particularly, to a sidelink communication method, apparatus, and communication device.

### BACKGROUND

With the development of wireless communication technology, in order to support direct communication between terminal devices, the sidelink (SL) communication mode has been introduced, and terminal devices communicate with each other through the PCS interface. The sidelink network supports various transmission modes such as unicast, multicast, and broadcast.

In the vehicle to everything (V2X) based on the long term evolution (LTE) communication network, the sidelink carrier aggregation (CA) technology has been already supported. Due to the limited transmission and reception capabilities of the terminal device, it may only be able to receive the sidelink services on one or several carriers. Since LTE V2X only supports broadcast services, no carrier selection/reselection enhancement scheme has been introduced for addressing the limited reception capabilities of the terminal device.

In the scenario of carrier aggregation in the sidelink of new radio (NR), terminal devices of previous versions (such as the terminal devices in version Rel-16 or Rel-17 of the communication protocols) may not be able to receive broadcast or multicast services sent by the terminal devices that support carrier aggregation (such as the terminal devices in version Rel-18 of the communication protocols), that is, there is a problem of backwards incompatibility of sidelink terminal devices.

### SUMMARY

The present disclosure provides a sidelink communication method, apparatus, and communication device to achieve backwards compatibility of a sidelink terminal device, thereby improving the performance of the terminal device.

According to a first aspect of the present disclosure, a sidelink communication method is provided, which may be applied to a transmitting device side in a sidelink communication system. The method may include: when all transmission attributes associated with a first destination address correspond to being compatible with carrier aggregation, determining that the first destination address is compatible with the carrier aggregation; or when at least one transmission attribute associated with the first destination address corresponds to being incompatible with the carrier aggregation, determining that the first destination address is incompatible with the carrier aggregation; where the first destination address is a destination address for a first service, and the first service is a broadcast service or a multicast service.

In some possible embodiments, the transmission attribute is used to indicate whether the broadcast service or the multicast service is compatible with the carrier aggregation.

In some possible embodiments, the transmission attribute is set according to a granularity of service type, or according to a granularity of destination address.

In some possible embodiments, in response to the transmission attribute being set according to the granularity of service type, one transmission attribute is associated with one service type, and at least one service type is associated with one destination address.

In some possible embodiments, all transmission attributes associated with the first destination address include: transmission attributes associated with all service types associated with the first destination address.

In some possible embodiments, in response to the transmission attribute being set according to the granularity of destination address, one transmission attribute is associated with one destination address.

In some possible embodiments, one or more transmission attributes are associated with one destination address, where the one or more transmission attributes include a transmission attribute indicating compatibility with the carrier aggregation and/or a transmission attribute indicating incompatibility with the carrier aggregation.

In some possible embodiments, the above method further includes: determining that any of first destination addresses is compatible with the carrier aggregation; and transmitting data of one or more first services simultaneously on a plurality of carriers.

In some possible embodiments, the above method further includes: determining that all of the first destination addresses are incompatible with the carrier aggregation; and transmitting the data of one or more first services on a single carrier.

In some possible embodiments, the above method further includes: determining that all of first destination addresses are compatible with the carrier aggregation; and transmitting data of one or more first services simultaneously on a plurality of carriers.

In some possible embodiments, the above method further includes: determining that any of the first destination addresses is incompatible with the carrier aggregation; and transmitting the data of one or more first services on a single carrier.

According to a second aspect of the present disclosure, a sidelink communication method is provided, which may be applied to a receiving device side in a sidelink communication system. The method may include: when all transmission attributes associated with a second destination address correspond to being compatible with carrier aggregation, determining that the second destination address is compatible with carrier aggregation; or when at least one transmission attribute associated with the second destination address corresponds to being incompatible with the carrier aggregation, determining that the second destination address is incompatible with the carrier aggregation; where the second destination address is a destination address of a second service of interest, and the second service is a broadcast service or a multicast service.

In some possible embodiments, the transmission attribute is used to indicate whether the broadcast service or multicast service is compatible with the carrier aggregation.

In some possible embodiments, the transmission attribute is set according to a granularity of service type, or according to a granularity of destination address.

In some possible embodiments, in response to the transmission attribute being set according to the granularity of service type, one transmission attribute is associated with one service type, and at least one service type is associated with one destination address.

In some possible embodiments, all transmission attributes associated with the second destination address include: transmission attributes associated with all service types associated with the second destination address.

In some possible embodiments, in response to the transmission attribute being set according to the granularity of destination address, one transmission attribute is associated with one destination address.

In some possible embodiments, one or more transmission attributes are associated with one destination address, where the one or more transmission attributes include a transmission attribute indicating compatibility with the carrier aggregation and/or a transmission attribute indicating incompatibility with the carrier aggregation.

In some possible embodiments, the above method further includes: determining that any of second destination addresses is compatible with the carrier aggregation; and simultaneously receiving data of one or more second services simultaneously on a plurality of carriers.

In some possible embodiments, the above method further includes: determining that all of the second destination addresses are incompatible with the carrier aggregation; and receiving the data of one or more second services on a single carrier.

In some possible embodiments, the above method further includes: determining that all of second destination addresses are compatible with the carrier aggregation; and receiving data of one or more second services simultaneously on a plurality of carriers.

In some possible embodiments, the above method further includes: determining that any of the second destination addresses is incompatible with the carrier aggregation; and receiving the data of one or more second services on a single carrier.

According to a third aspect of the present disclosure, a communication apparatus is provided, which may be a transmitting device or a chip or a system-on-chip in the transmitting device in a sidelink communication system, and may also be a functional module in the transmitting device for implementing the methods of the above embodiments. The communication apparatus may implement the functions executed by the transmitting device in the above embodiments, and these functions may be implemented by executing corresponding software through hardware. These hardware or software includes one or more modules corresponding to the above functions. The communication apparatus includes: a processing module, configured to: determine that a first destination address is compatible with carrier aggregation when all transmission attributes associated with the first destination address correspond to being compatible with the carrier aggregation; or determine that the first destination address is incompatible with the carrier aggregation when at least one transmission attribute associated with the first destination address corresponds to being incompatible with the carrier aggregation; where the first destination address is a destination address of a first service, and the first service is a broadcast service or a multicast service.

In some possible embodiments, the transmission attribute is used to indicate whether the broadcast service or the multicast service is compatible with the carrier aggregation.

In some possible embodiments, the transmission attribute is set according to a granularity of service type, or according to a granularity of destination address.

In some possible embodiments, in response to the transmission attribute being set according to the granularity of service type, one transmission attribute is associated with one service type, and at least one service type is associated with one destination address.

In some possible embodiments, all transmission attributes associated with the first destination address include: transmission attributes associated with all service types associated with the first destination address.

In some possible embodiments, in response to the transmission attribute being set according to the granularity of destination address, one transmission attribute is associated with one destination address.

In some possible embodiments, one or more transmission attributes are associated with one destination address, where the one or more transmission attributes include a transmission attribute indicating compatibility with the carrier aggregation and/or a transmission attribute indicating incompatibility with the carrier aggregation.

In some possible embodiments, the above apparatus further includes a transmitting module, where the processing module is further configured to determine that any of first destination addresses is compatible with the carrier aggregation, and the transmitting module is configured to transmit data of one or more first services simultaneously on a plurality of carriers.

In some possible embodiments, the above apparatus further includes a transmitting module, where the processing module is further configured to determine that all of the first destination addresses are incompatible with the carrier aggregation, and the transmitting module is configured to transmit the data of one or more first services on a single carrier.

In some possible embodiments, the above apparatus further includes a transmitting module, where the processing module is further configured to determine that all of first destination addresses are compatible with the carrier aggregation, and the transmitting module is configured to transmit data of one or more first services simultaneously on a plurality of carriers.

In some possible embodiments, the above apparatus further includes a transmitting module, where the processing module is further configured to determine that any of the first destination addresses is incompatible with the carrier aggregation, and the transmitting module is configured to transmit the data of one or more first services on a single carrier.

According to a fourth aspect of the present disclosure, a communication apparatus is provided, which may be a receiving device or a chip or a system-on-chip in the receiving device in a sidelink communication system, or a functional module in the receiving device for implementing the methods of the various embodiments described above. This communication apparatus may perform the functions executed by the receiving device in the various embodiments described above, and these functions may be implemented by executing corresponding software on hardware. These hardware or software includes one or more modules corresponding to the aforementioned functions. The communication apparatus includes: a processing module, configured to: determine that a second destination address is compatible with carrier aggregation when all transmission attributes associated with the second destination address correspond to being compatible with the carrier aggregation; or determine that the second destination address is incompatible with the carrier aggregation when at least one transmission attribute associated with the second destination address corresponds to being incompatible with the carrier aggregation; where the second destination address is a destination address of a second service of interest, and the second service is a broadcast service or a multicast service.

In some possible embodiments, the transmission attribute is used to indicate whether the broadcast service or the multicast service is compatible with the carrier aggregation.

In some possible embodiments, the transmission attribute is set according to a granularity of service type, or according to a granularity of destination address.

In some possible embodiments, in response to the transmission attribute being set according to the granularity of service type, one transmission attribute is associated with one service type, and at least one service type is associated with one destination address.

In some possible embodiments, all transmission attributes associated with the second destination address include: transmission attributes associated with all service types associated with the second destination address.

In some possible embodiments, in response to the transmission attribute being set according to the granularity of destination address, one transmission attribute is associated with one destination address.

In some possible embodiments, one or more transmission attributes are associated with one destination address, where the one or more transmission attributes include a transmission attribute indicating compatibility with the carrier aggregation and/or a transmission attribute indicating incompatibility with the carrier aggregation.

In some possible embodiments, the above apparatus further includes a receiving module, where the processing module is further configured to determine that any of second destination addresses is compatible with the carrier aggregation, and the receiving module is configured to receive data of one or more second services simultaneously on a plurality of carriers.

In some possible embodiments, the above apparatus further includes a receiving module, where the processing module is further configured to determine that all of the second destination addresses are incompatible with the carrier aggregation, and the receiving module is configured to receive the data of one or more second services on a single carrier.

In some possible embodiments, the above apparatus further includes a receiving module, where the processing module is further configured to determine that all of second destination addresses are compatible with the carrier aggregation, and the receiving module is configured to receive data of one or more second services simultaneously on a plurality of carriers.

In some possible embodiments, the above apparatus further includes a receiving module, where the processing module is further configured to determine that any of the second destination addresses is incompatible with the carrier aggregation, and the receiving module is configured to receive the data of one or more second services on a single carrier.

According to a fifth aspect of the present disclosure, a communication device, such as a transmitting device, is provided, including: an antenna; a memory; and a processor, which is connected to the antenna and the memory respectively and configured to execute computer-executable instructions stored on the memory, control the transmission and reception of the antenna, and implement the method according to any of the first aspect of the present disclosure and possible embodiments thereof.

According to a sixth aspect of the present disclosure, a communication device, such as a receiving device, is provided, including: an antenna; a memory; and a processor, which is respectively connected to the antenna and the memory and configured to execute computer-executable instructions stored on the memory, control the transmission and reception of the antenna, and implement the method according to any of the second aspect of the present disclosure and possible embodiments thereof.

According to a seventh aspect of the present disclosure, a computer storage medium is provided, which stores computer-executable instructions. When the computer-executable instructions are executed by a processor, the computer-executable instructions are capable of implementing the method as described in any of the first to second aspects of the present disclosure and possible embodiments thereof.

According to an eighth aspect of the present disclosure, a computer program or computer program product is provided, which, when executed on a computer, causes the computer to implement the method as described in any of the first to second aspects of the present disclosure and possible embodiments thereof.

In the present disclosure, the sidelink terminal device determines whether the destination address of the first service is compatible with carrier aggregation based on the indication of the associated transmission attribute (Tx profile). That is, it determines whether the associated receiving device supports carrier aggregation. In this way, in the sidelink carrier aggregation scenario, it ensures that terminal devices of previous versions (such as those in version Rel-16 or Rel-17 of the communication protocol) can receive broadcast or multicast services sent by terminal devices of the latest version (such as those supporting carrier aggregation in version Rel-18 of the communication protocol), thereby achieving backward compatibility of the sidelink terminal device and enhancing its performance.

It should be understood that the third to seventh aspects of the present disclosure are consistent with the technical solutions of the first and second aspects of the present disclosure, and the beneficial effects achieved by various aspects and corresponding feasible implementations are similar, which will not be repeated herein.

### BRIEF DESCRIPTION OF THE DRAWINGS

FIG. 1 is a schematic diagram of an architecture of a communication system in an embodiment of the present disclosure;
FIG. 2 is another schematic diagram of the architecture of the communication system in the embodiment of the present disclosure;
FIG. 3 is a schematic diagram of an implementation process of a sidelink communication method in an embodiment of the present disclosure;
FIG. 4 is a schematic diagram of an implementation process of a sidelink communication method in an embodiment of the present disclosure;
FIG. 5 is a schematic diagram of an implementation process of a sidelink communication method in an embodiment of the present disclosure;
FIG. 6 is a schematic diagram of an implementation process of a sidelink communication method in an embodiment of the present disclosure;
FIG. 7 is a schematic diagram of an implementation process of a sidelink communication method in an embodiment of the present disclosure;
FIG. 8 is a schematic diagram of an implementation process of a sidelink communication method in an embodiment of the present disclosure;
FIG. 9 is a structural schematic diagram of a measurement reporting apparatus in an embodiment of the present disclosure;
FIG. 10 is a structural schematic diagram of a communication device in an embodiment of the present disclosure;
FIG. 11 is a structural schematic diagram of a terminal device in an embodiment of the present disclosure; and
FIG. 12 is a structural schematic diagram of a network device in an embodiment of the present disclosure.

### DETAILED DESCRIPTION

Exemplary embodiments will be described in detail herein, examples of which are represented in the accompanying drawings. When the following description relates to the accompanying drawings, the same numerals in different drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the present disclosure, such information should not be limited to these terms. These terms are only used to distinguish the same type of information from each other. For example, without departing from the scope of the embodiments of the present disclosure, the "first information" may also be referred to as the "second information", and similarly, the "second information" may also be referred to as the "first information". Depending on the context, the word "if" as used herein may be interpreted as "when... " or "in the case..." or "in response to determination".

Furthermore, in the description of the embodiments of the present disclosure, "and/or" merely denotes the associative relationship between associated objects, indicating that there may be three relationships. For example, "A and/or B" may represent three scenarios: A exists alone, A and B exist simultaneously, or B exists alone. Additionally, in the description of the embodiments of the present disclosure, "a plurality of" may refer to two or more than two.

The technical solutions provided by the embodiments of the present disclosure may be applied to a wireless communication between communication devices. The wireless communication between communication devices may include: a wireless communication between a network device and a terminal device, a wireless communication between network devices, and a wireless communication between terminal devices. In the embodiments of the present disclosure, the term "wireless communication" may also be abbreviated as "communication", and the term "communication" may also be described as "data transmission", "information transmission", or "transmission".

The embodiments of the present disclosure list a plurality of implementations to clearly explain the technical solutions of the embodiments of the present disclosure. Those skilled in the art may understand that the implementations provided by the embodiments of the present disclosure may be performed alone, or may be performed together after being combined with the methods of other embodiments in the embodiments of the present disclosure, or may also be executed alone or in combination with some methods of other related technologies, which is not limited by the embodiments of the present disclosure.

With the development of wireless communication technology, in order to support direct communication between terminal devices, a sidelink (SL) communication mode has been introduced, and communication between terminal devices is performed through the PCS interface. The sidelink network supports various transmission modes, such as unicast, multicast, and broadcast.

In an embodiment, there are two modes of transmitting resource allocation for sidelink communication. One is a mode of dynamic scheduling performed by the network (i.e., mode 1), and the other is a mode of autonomous selection performed by the terminal device from the resource pool broadcasted by the network (i.e., mode 2). In mode 1, the network dynamically allocates SL transmission resources to the terminal device according to the buffer data report of the terminal device. In mode 2, the terminal device randomly selects SL transmission resources by itself from the resource pool broadcasted by the network or the pre-configured resource pool. Here, the "pre-configured" may be obtained by the terminal device from the network element of the core network, or may be pre-set within the terminal device.

In practical applications, which specific resource allocation mode the terminal device uses may be configured by the network side through upper layer signaling (such as radio resource control (RRC) signaling). The transmitting device transmits sidelink control information (SCI) on the physical sidelink control channel (PSCCH) and also transmits SCI on the physical sidelink shared channel (PSSCH), which carries the location of the resource for transmitting data as well as the source and destination identifiers, etc. For a data packet with hybrid automatic repeat request (HARQ) enabled (i.e., HARQ-enable), the receiving device performs HARQ feedback for the PSSCH on the physical sidelink feedback channel (PSFCH).

In another embodiment, in order to meet the requirements for improving the peak rate of a single user and the system capacity, one of the most straightforward methods is to increase the system transmission bandwidth. Therefore, a technology to increase transmission bandwidth, namely carrier aggregation (CA) technology, is introduced in the LTE-Advanced system. Here, CA technology can aggregate a plurality of component carriers (CC) together, thereby effectively improving the uplink and downlink transmission rates.

In the sidelink communication system based on the long term evolution (LTE) communication network, the sidelink carrier aggregation (CA) technology is already supported. Due to the limited transmission and reception capabilities of the terminal device, it may only be able to receive the sidelink service on one or several carriers. Since the LTE-based sidelink communication system only supports the broadcast service, no enhanced carrier selection/reselection scheme has been introduced for the limited reception capabilities of the terminal device.

In the scenario of carrier aggregation in the new radio (NR) sidelink, the terminal devices in previous versions (such as the terminal devices in the version 3GPP Release-16 or Release-17 of the communication protocols) may not be able to receive broadcast or multicast services sent by the terminal devices that support carrier aggregation (such as the terminal devices in the version Rel-18 of the communication protocols). That is to say, there exists the problem of backward incompatibility of sidelink terminal devices.

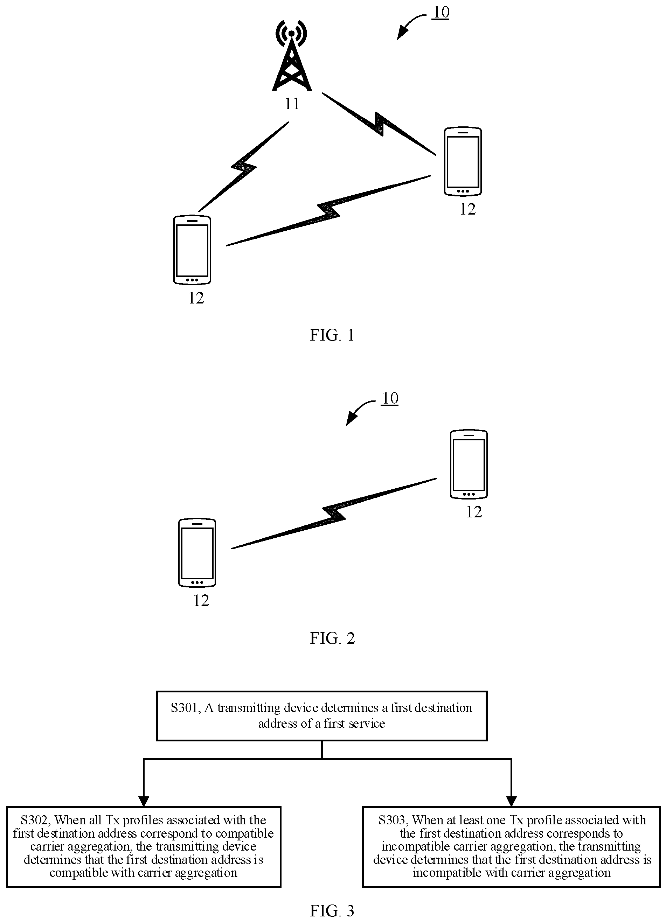

In order to solve the above technical problems, an embodiment of the present disclosure provides a sidelink communication method, which may be applied to a communication system. This communication system may be a sidelink communication system, suitable for fields such as vehicle to everything (V2X), intelligent connected vehicles, and autonomous vehicles. The communication system may include at least one communication device. In one scenario, FIG. 1 a schematic diagram of an architecture of the communication system in an embodiment of the present disclosure. Referring to FIG. 1, the communication system 10 may include: a network device 11 and a terminal device 12. In another scenario, FIG. 2 is another schematic diagram of the architecture of the communication system in an embodiment of the present disclosure. Referring to FIG. 2, the communication system 10 may also include a plurality of terminal devices 12. In the embodiments of the present disclosure, the types and numbers of network elements included in the communication system, as well as the connection relationships between the network elements, are not limited thereto.

In the embodiments of the present disclosure, while communicating with the network device, the terminal device may also communicate with other terminal devices. The network device may perform resource allocation, scheduling, coordination, etc. for the sidelink of the communication between terminal devices, so as to assist the terminal devices in directly communicating with each other. The terminal device may also perform resource allocation, scheduling, coordination, etc. for the sidelink of the communication between other terminal devices by itself. The embodiments of the present disclosure do not impose specific limitations.

In some possible embodiments, the above network device may be a device on the access network side used to support the terminal device accessing a wireless communication system. For example, it may be a next generation base station (next generation NodeB, gNB), a transmission reception point (TRP), a relay node, an access point (AP), a road side unit (RSU), etc., in a 5G access technology communication system.

The above terminal device may be a device that provides voice or data connectivity to users. For example, it may also be referred to as a user equipment (UE), a mobile station, a subscriber unit, a station (STAtion), or a terminal equipment (TE). The communication device may be a cellular phone, a personal digital assistant (PDA), a wireless modem, a handheld vehicle to pedestrian (V2P) device, a laptop computer, a cordless phone, a wireless local loop (WLL) station, a tablet (pad), a relay node, an AP, etc. With the development of wireless communication technology, any device that can access the wireless communication system, communicate with the network side of the wireless communication system, or communicate with other devices through the wireless communication system can all be the terminal device in the embodiments of the present application. For example, a terminal device in intelligent transportation, a car or an RSU, a household device in the smart home, an electricity meter reading instrument in the smart grid, a voltage monitoring instrument, an environmental monitoring instrument, a video surveillance instrument in the intelligent security network, a cash register, etc. The communication device may be static and fixed or mobile.

Furthermore, in the sidelink transmission scenario, the above communication device (which may include a terminal device and/or a network device) may be classified into a transmitting device and a receiving device based on the direction of data transmission. Specifically, the transmitting device (also referred to as transmitting-end devices) may include a transmitting-end network device, a transmitting-end terminal device, and a transmitting-end user device, etc. The receiving device (also referred to as the receiving-end device) may include a receiving-end network device, a receiving-end terminal device, and a receiving-end user device, etc.

It should be noted that the above transmitting device (also referred to as the transmitting-end network device, transmitting-end terminal device, transmitting-end user device, etc.) and receiving device (also referred to as the receiving-end network device, receiving-end terminal device, receiving-end user device, etc.) are defined with respect to a specific sidelink connection. For example, a communication device (or a network device, a terminal device, a user device, etc.) may be a transmitting device (or a transmitting-end network device, a transmitting-end terminal device, a transmitting-end user device, etc.) for a sidelink connection A, while for a sidelink connection B, the communication device (or network device, terminal device, user device, etc.) may be a receiving device (or a receiving-end network device, a receiving-end terminal device, a receiving-end user device, etc.).

In the following, the sidelink communication method provided in an embodiment of the present disclosure will be explained in conjunction with the above communication system.

Firstly, it should be noted that in the embodiments of the present disclosure, for the broadcast service or the multicast service (hereinafter referred to as "the broadcast/multicast service"), an associated transmission attribute (Tx profile) is set (also referred to as "defined"). Here, the "transmission attribute" may also be described as "transmission configuration", "transmission configuration file", "transmission file", etc.

In an embodiment, the Tx profile is introduced to ensure compatibility of broadcast or multicast transmission between terminal devices that are compatible or incompatible with carrier aggregation function. It can be understood that the Tx profile is used to indicate whether the broadcast/multicast service is compatible with carrier aggregation, that is, the Tx profile is used to indicate whether the broadcast service or multicast service is compatible with carrier aggregation or not. For example, the Tx profile may indicate the version of a communication standard (such as Rel-18), or indicate whether carrier aggregation is enabled (such as carrier aggregation compatible (ca-compatible), carrier aggregation incompatible (ca-incompatible)).

It should be noted that the above "whether the broadcast/multicast service is compatible with carrier aggregation" may be understood as: for a certain broadcast/multicast service, whether the sidelink resources on multiple carriers can be simultaneously used to transmit the data of the destination address associated with this service. Here, the destination address may be identified by a destination ID.

In some possible embodiments, the Tx profile may be set according to the granularity of service type or according to the granularity of destination address.

In an embodiment, if the Tx profile is set according to the granularity of service type, then one Tx profile is associated with one service type, that is to say, the Tx profiles correspond one-to-one with the service types, and different service types are associated with different Tx profiles. Additionally, at least one service type is associated with one destination address, that is to say, one destination address may be associated with multiple different service types, and thus one destination address may be associated with one or more Tx profiles. For example, if the destination ID corresponding to the first destination address is A, and the service types associated with the first destination address are type A, type B, and type C, with type A corresponding to Tx profile 1, type B corresponding to Tx profile 2, and type C corresponding to Tx profile 3, then the Tx profiles associated with the first destination address are Tx profile 1, Tx profile 2, and Tx profile 3.

In another embodiment, if Tx profiles are set according to the granularity of destination addresses, then one Tx profile is associated with one destination address. That is to say, there is only one Tx profile associated with one destination address, and it is necessary for the upper layer to ensure that all service types associated with one destination address have the same Tx profile. For example, the destination ID corresponding to the first destination address is A, and the Tx profile associated with the first destination address is Tx profile 1.

As can be seen from the above, in the embodiments of the present disclosure, one or more Tx profiles are associated with one destination address, where one or more Tx profiles include a Tx profile for indicating compatibility with carrier aggregation and/or a Tx profile for indicating incompatibility with carrier aggregation. That is to say, for one destination address, one or more Tx profiles may be associated, including the Tx profile corresponding to being compatible with carrier aggregation and the Tx profile corresponding to being incompatible with carrier aggregation. Of course, there may be other situations regarding the association relationship between the Tx profile and the destination address, which is not limited by the embodiments of the present disclosure.

In some possible embodiments, the Tx profile associated with the destination address is provided by an upper layer (such as the V2X layer) to the access stratum (AS), and identifies one or more sidelink feature group(s).

In an embodiment, the upper layer may indicate the Tx profile to the AS in the form of a Tx profile list. Of course, the upper layer may also indicate the Tx profile to the AS in other forms such as a linked list or an index, etc., which is not limited by the embodiments of the present disclosure.

Exemplarily, if Tx profiles are set according to the granularity of service types, the upper layer may indicate Tx profiles to the AS in the form of a Tx profile list. The list may include Tx profiles associated with different service types, or the list may include service types associated with different destination addresses as well as the Tx profiles associated with those service types.

Exemplarily, if Tx profiles are set according to the granularity of destination addresses, the upper layer may also indicate Tx profiles to the AS in the form of a Tx profile list, which may include Tx profiles associated with different destination addresses.

In some possible embodiments, the setting of the above Tx profile may be understood as pre-configured by the sidelink system (or specified in the communication protocol). Each network element in the sidelink system executes operations according to the above Tx profile setting.

In the following, a sidelink communication method provided in the embodiments of the present disclosure will be explained.

In some possible embodiments, the embodiments of the present disclosure provide a sidelink communication method that may be applied to a transmitting device side in a sidelink communication system. FIG. 3 is a schematic diagram of an implementation process of a sidelink communication method in an embodiment of the present disclosure. Referring to FIG. 3, for Tx profile being set based on the granularity of service type, the above method may include the following steps.

In S301, a transmitting device determines a first destination address of a first service.

Here, the first service may be a broadcast/multicast service.

It can be understood that in the transmitting device, the upper layer triggers the first service, determines the first destination address associated with the first service, and instructs the AS. The AS determines the Tx profile associated with the first destination address through one or more Tx profiles associated with the destination address of the first service indicated by the upper layer. These one or more Tx profiles correspond to a plurality of service types.

In the embodiments of the present disclosure, since Tx profiles are set according to the granularity of service types, one or more Tx profiles associated with the first destination address may be understood as the Tx profiles corresponding to one or more service types associated with the first destination address. Different Tx profiles may indicate whether the services of different service types are compatible with carrier aggregation.

In the following, after S301, the transmitting device may perform either S302 or S303.

In S302, when all Tx profiles associated with the first destination address correspond to being compatible with carrier aggregation, the transmitting device determines that the first destination address is compatible with carrier aggregation.

It can be understood that the AS may determine the Tx profile associated with the first destination address based on the instructions from the upper layer, and then determine whether each Tx profile corresponds to being compatible with carrier aggregation or being incompatible with carrier aggregation. The AS determines that all Tx profiles associated with all task types related to the first destination address correspond to being compatible with carrier aggregation (which may also be understood as all Tx profiles associated with the first destination address indicate compatibility with carrier aggregation). In this case, the AS determines that the first destination address is compatible with carrier aggregation. At this time, the transmitting device assumes (which may also be described as supposes, postulates, etc.) that the first destination address is compatible with carrier aggregation.

In S303, when at least one Tx profile associated with the first destination address corresponds to being incompatible with carrier aggregation, the transmitting device determines that the first destination address is incompatible with carrier aggregation.

It can be understood that the AS determines that the Tx profile associated with at least one service type related to the first destination address corresponds to being incompatible with carrier aggregation (which may also be understood that at least one Tx profile associated with the first destination address indicate incompatibility with carrier aggregation destination address). In this case, the AS determines that the first destination address is incompatible with carrier aggregation. In this case, the transmitting device assumes (which may also be described as supposing, hypothesizing, etc.) that the first destination address is incompatible with carrier aggregation.

It should be noted that the above "at least one Tx profile associated with the first destination address corresponds to being incompatible with carrier aggregation" may also be understood as any Tx profile among the Tx profiles associated with the first destination address (i.e., any Tx profile associated with the first destination address) corresponds to being incompatible with carrier aggregation, or alternatively, any Tx profile associated with the first destination address indicates incompatibility with carrier aggregation.

Exemplarily, the first destination address is destination A, the service types associated with the first destination address are type A, type B and type C. The Tx profile corresponding to type A is Tx profile 1, the Tx profile corresponding to type B is Tx profile 2, and the Tx profile corresponding to type C is Tx profile 3. Then, the Tx profiles associated with destination A are Tx profile 1, Tx profile 2, and Tx profile 3. If Tx profile 1 indicates that the broadcast/multicast service of type A is compatible with carrier aggregation, Tx profile 2 indicates that the broadcast/multicast service of type B is compatible with carrier aggregation, and Tx profile 3 indicates that the broadcast/multicast service of type C is compatible with carrier aggregation, the AS can determine that all Tx profiles associated with destination A correspond to being compatible with carrier aggregation. In this case, the AS determines that destination A is compatible with carrier aggregation. Conversely, if at least one of Tx profile 1, Tx profile 2, and Tx profile 3 indicates that the broadcast/multicast service is not compatible with carrier aggregation, the AS may determine that at least one Tx profile associated with destination A corresponds to being incompatible with carrier aggregation. In this case, the AS determines that destination A is incompatible with carrier aggregation.

In some possible embodiments, the transmitting device may trigger one or more broadcast/multicast services, that is, trigger one or more first services. Then, the transmitting device may perform the above S301 to S303 for each of the one or more first services, thereby determining whether one or more first destination addresses are compatible with carrier aggregation. After determining whether one or more first destination addresses are compatible with carrier aggregation, the transmitting device may choose whether to enable or disable carrier aggregation, so as to transmit data of the one or more first services on multiple carriers or on a single carrier.

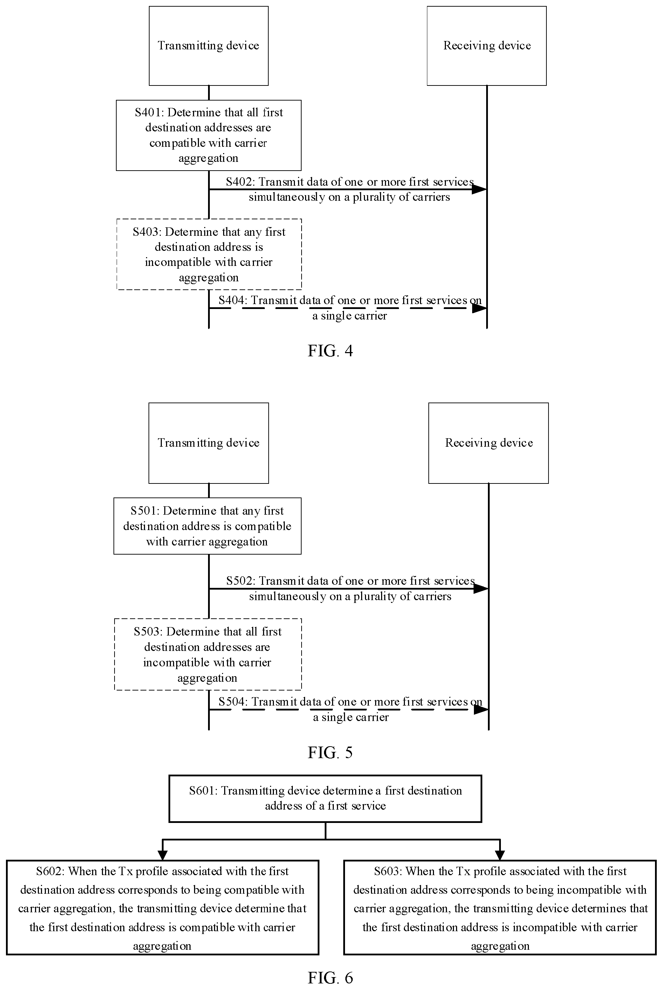

In an embodiment, FIG. 4 is a schematic diagram of an implementation process of a sidelink communication method in an embodiment of the present disclosure. Referring to FIG. 4, after S302 or S303, the transmitting device may execute S401 to S402 (as indicated by the solid line) or S403 to S404 (as indicated by the dashed line).

In S401, the transmitting device determines that all first destination addresses are compatible with carrier aggregation.

In S402, the transmitting device simultaneously transmits data of one or more first services on a plurality of carriers.

It can be understood that in S401 to S402, the AS determines that all of one or more first destination addresses are compatible with carrier aggregation. At this time, the AS enables carrier aggregation and simultaneously transmits data of one or more first services on a plurality of carriers.

In S403, the transmitting device determines that any first destination address is incompatible with carrier aggregation.

It should be noted that the aforementioned "any first destination address is incompatible with carrier aggregation" may be understood as at least one of one or more first destination addresses being incompatible with carrier aggregation.

In S404, the transmitting device transmits data of one or more first services on a single carrier.

Here, the single carrier may be a default carrier, such as the sidelink carrier in the version Rel-16 or Rel-17 of the communication protocols.

It can be understood that in S403 to S404, if the AS determines that any of the one or more first destination addresses is incompatible with carrier aggregation, the AS will disable carrier aggregation and transmit the data of one or more first services on a single carrier.

Exemplarily, the destination addresses of multiple first services may be destination A, destination B, and destination C. For each destination address, the transmitting device executes the above steps S301 to S304 to respectively determine whether destination A, destination B, and destination C are compatible with carrier aggregation. If it is determined that destination A, destination B, and destination C are compatible with carrier aggregation, the AS enables carrier aggregation and simultaneously transmits data of multiple first services on multiple carriers. Alternatively, if it is determined that any of destination A, destination B, and destination C is not compatible with carrier aggregation, the AS deactivates carrier aggregation and transmits data of multiple first services on a single carrier.

In another embodiment, FIG. 5 illustrates a schematic diagram of an implementation process of a sidelink communication method in an embodiment of the present disclosure. Referring to FIG. 5, after S302 or S303, the transmitting device may execute S501 to S502 (as indicated by the solid line) or S503 to S504 (as indicated by the dashed line).

In S501, the transmitting device determines that any first destination address is compatible with carrier aggregation.

It should be noted that the aforementioned "any first destination address is compatible with carrier aggregation" may be understood as at least one of one or more first destination addresses being compatible with carrier aggregation.

In S502, the transmitting device simultaneously transmits data of one or more first services on a plurality of carriers.

It can be understood that in S501 to S502, the AS determines whether any of one or more first destination addresses is compatible with carrier aggregation. At this time, the AS enables carrier aggregation and simultaneously transmits data of one or more first services on multiple carriers.

In S503, the transmitting device determines that all first destination addresses are incompatible with carrier aggregation.

In S504, the transmitting device transmits data of one or more first services on a single carrier.

It can be understood that in S503 to S504, the AS determines that all of one or more first destination addresses are incompatible with carrier aggregation. In this case, the AS disables carrier aggregation and transmits data of one or more first services on a single carrier.

Exemplarily, the destination addresses of multiple first services may be destination A, destination B, and destination C. For each destination address, the transmitting device executes the aforementioned S301 to S304 to determine whether destination A, destination B, and destination C are compatible with carrier aggregation. If it is determined that any destination address of destination A, destination B, and destination C is compatible with carrier aggregation, the AS enables carrier aggregation and simultaneously transmits data of multiple first services on multiple carriers. Alternatively, if it is determined that destination A is not compatible with carrier aggregation, destination B is not compatible with carrier aggregation, and destination C is not compatible with carrier aggregation, the AS disables carrier aggregation and transmits data of multiple first services on a single carrier.

In some possible embodiments, FIG. 6 is a schematic diagram of an implementation process of a sidelink communication method in an embodiment of the present disclosure. Referring to FIG. 6, for Tx profile being set according to the granularity of destination address, the above method may include the following steps.

In S601, the transmitting device determines a first destination address of a first service.

Here, the first service may be a broadcast/multicast service.

It can be understood that in the transmitting device, the upper layer triggers the first service, determines the first destination address associated with the first service, and instructs the AS. The AS determines the Tx profile associated with the first destination address through the Tx profile associated with the destination address of the first service indicated by the upper layer. One first destination address is associated with one Tx profile.

In the following, after S601, the transmitting device may execute S602 or S603.

In S603, when the Tx profile (i.e., one Tx profile) associated with the first destination address corresponds to being compatible with carrier aggregation, the transmitting device determines that the first destination address is compatible with carrier aggregation.

It can be understood that the AS may determine one Tx profile associated with the first destination address based on the indication of the upper layer, and then determine whether the Tx profile corresponds to being compatible with carrier aggregation or being incompatible with carrier aggregation. The AS determines that the Tx profile associated with the first destination address corresponds to being compatible with carrier aggregation (which may also be understood as the Tx profile associated with the first destination address indicates compatibility with carrier aggregation), in this case, the AS determines that the first destination address is compatible with carrier aggregation. In this case, the transmitting device (such as the AS) assumes (which may also be described as supposing, hypothesizing, etc.) that the first destination address is compatible with carrier aggregation.

It should be noted that the above "the Tx profile associated with the first destination address corresponds to being compatible with carrier aggregation" may also be interpreted as either the sole Tx profile associated with the first destination address corresponds to being compatible with carrier aggregation, or all Tx profiles associated with the first destination address correspond to being compatible with carrier aggregation.

In S603, when the Tx profile (i.e., one Tx profile) associated with the first destination address corresponds to being incompatible with carrier aggregation, the transmitting device determines that the first destination address is incompatible with carrier aggregation.

It can be understood that when the AS determines that the Tx profile associated with the first destination address corresponds to being incompatible with carrier aggregation (which may also be understood as that the Tx profile associated with the first destination address indicates incompatibility with carrier aggregation), in this case, the AS determines that the first destination address is incompatible with carrier aggregation. In this case, the transmitting device (such as the AS) assumes (which may also be described as supposing, hypothesizing, etc.) that the first destination address is incompatible with carrier aggregation.

It should be noted that the above "the Tx profile associated with the first destination address corresponds to being incompatible with carrier aggregation" may also be interpreted as the sole Tx profile associated with the first destination address corresponds to being incompatible with carrier aggregation, or alternatively, as one Tx profile associated with the first destination address indicates incompatibility with carrier aggregation.

Exemplarily, the first destination address is destination A, and the Tx profile associated with the first destination address is Tx profile 1. If Tx profile 1 indicates that the broadcast/multicast service is compatible with carrier aggregation, the AS may determine that all Tx profiles associated with destination A correspond to being compatible with carrier aggregation. In this case, the AS determines that destination A is compatible with carrier aggregation. Conversely, if Tx profile 1 indicates that the broadcast/multicast service is not compatible with carrier aggregation, the AS may determine that one Tx profile associated with destination A corresponds to being incompatible with carrier aggregation. In this case, the AS determines that destination A is not compatible with carrier aggregation.

In some possible embodiments, the transmitting device may also trigger one or more broadcast/multicast services, that is, trigger one or more first services. Then, the transmitting device may perform the above S601 to S603 separately for each of the one or more first services, thereby determining whether one or more first destination addresses are compatible with carrier aggregation. Next, after S602 or S603, the transmitting device may also, but not limited to, perform the above S401 to S404 or S501 to S504, which will not be elaborated here.

At this point, the side-link communication process on the transmitting device side has been completed.

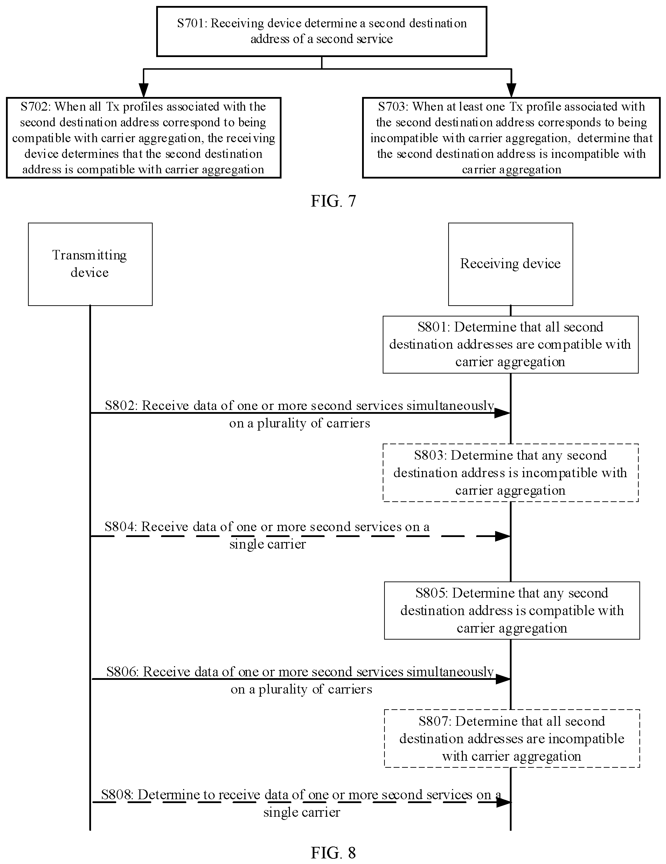

In some possible embodiments, the embodiments of the present disclosure further provide a sidelink communication method, which may be applied to a receiving device side in a sidelink communication system. FIG. 7 is a schematic diagram of an implementation process of a sidelink communication method in an embodiment of the present disclosure. Referring to FIG. 7, for Tx profile settings according to the granularity of service type, the above method may include the following steps.

In S701, the receiving device determines a second destination address of a second service.

Here, the second service may be a broadcast/multicast service that the receiving device is interested in.

It can be understood that in the receiving device, the upper layer determines the second service of interest and indicates the second destination address of the second service to the AS. The AS determines one or more Tx profiles associated with the second destination address through one or more Tx profiles associated with the destination address of the second service indicated by the upper layer. These one or more Tx profiles correspond to a plurality of service types.

In the following, after S701, the transmitting device can execute S702 or S703.

In S702, when all Tx profiles associated with the second destination address correspond to being compatible with carrier aggregation, the receiving device determines that the second destination address is compatible with carrier aggregation.

In S703, when at least one Tx profile associated with the second destination address corresponds to being incompatible with carrier aggregation, it is determined that the second destination address is incompatible with carrier aggregation.

It should be noted that the execution process of the aforementioned S701 to S703 may refer to the specific descriptions of S301 to S303 in FIG. 3. For the sake of brevity of the specification, it will not be elaborated here.

In some possible embodiments, the receiving device may also be interested in one or more broadcast/multicast services, i.e., there are one or more second services. In this case, the receiving device may perform the above S701 to S703 for each of the one or more second services, thereby determining whether the one or more second destination addresses are compatible with carrier aggregation. After determining whether the one or more second destination addresses are compatible with carrier aggregation, the receiving device may choose whether to enable or disable carrier aggregation, so as to receive data of the one or more second services on multiple carriers or on a single carrier.

In an embodiment, FIG. 8 is a schematic diagram of an implementation process of a sidelink communication method in an embodiment of the present disclosure. Referring to FIG. 8, after S302 or S303, the transmitting device may execute S801 to S802 (as indicated by the solid line) or S803 to S804 (as indicated by the dashed line).

In S801, the receiving device determines that all second destination addresses are compatible with carrier aggregation.

In S802, the receiving device simultaneously receives data of one or more second services on a plurality of carriers.

In S803, the receiving device determines that any second destination address is incompatible with carrier aggregation.

It should be noted that the aforementioned "any second destination address is incompatible with carrier aggregation" may be understood as meaning that at least one of one or more second destination addresses is incompatible with carrier aggregation.

In S804, the receiving device receives data of one or more second services on a single carrier.

Here, a single carrier may be a default carrier, such as the sidelink carrier in the version Rel-16 or Rel-17 of the communication protocols.

In another embodiment, after S302 or S303, the transmitting device may execute S805 to S806 (as indicated by the solid line) or S807 to S808 (as indicated by the dashed line).

In S805, the receiving device determines that any second destination address is compatible with carrier aggregation.

In S806, the receiving device simultaneously receives data of one or more second services on a plurality of carriers.

In S807, the receiving device determines that all second destination addresses are incompatible with carrier aggregation.

In S808, the receiving device determines to receive data of one or more second services on a single carrier.

It should be noted that the execution process of the aforementioned S801 to S808 may refer to the specific descriptions of S401 to S404 in FIG. 4 and S501 to S504 in FIG. 5. For the sake of brevity of the specification, it will not be elaborated here.

At this point, the side-link communication process on the receiving device side has been completed.

In the embodiments of the present disclosure, the sidelink terminal device determines whether the destination address of the first service is compatible with carrier aggregation based on the indication of the associated Tx profile. That is, it determines whether the associated receiving device supports carrier aggregation. In this way, in the sidelink carrier aggregation scenario, it ensures that terminal devices of previous versions (such as those in the Rel-16 or Rel-17 communication protocols) can receive broadcast or multicast services sent by terminal devices of the latest version (such as those supporting carrier aggregation in the Rel-18 communication protocol), thereby achieving backwards compatibility of the sidelink terminal device and enhancing the performance of the terminal device.

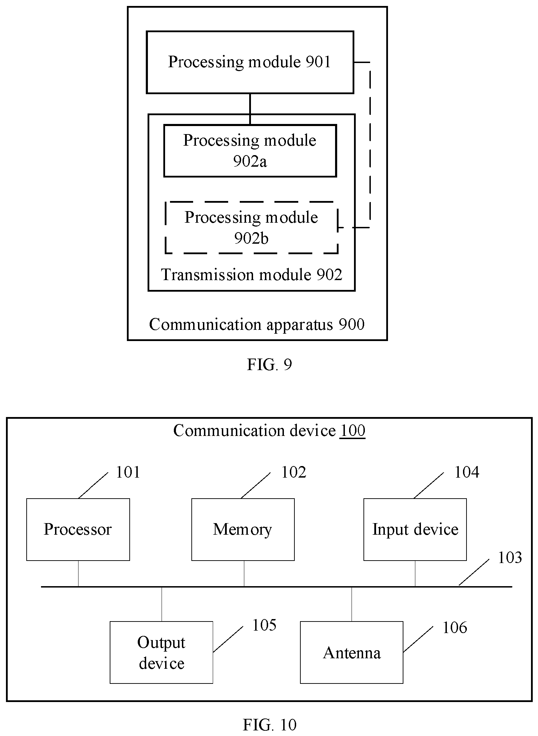

Based on the same inventive concept, the embodiments of the present disclosure provide a sidelink communication apparatus. FIG. 9 is a structural schematic diagram of a communication apparatus in an embodiment of the present disclosure. Referring to FIG. 9, the communication apparatus 900 may include: a processing module 901 and a transmission module 902.

In some possible embodiments, the communication apparatus 900 may be a transmitting device or a chip or a system-on-chip within the transmitting device in a sidelink communication system, and may also be a functional module within the transmitting device for implementing the methods of the various embodiments described above. The communication apparatus may implement the functions executed by the transmitting device in the various embodiments described above, and these functions may be implemented by executing corresponding software through hardware. These hardware or software includes one or more modules corresponding to the above functions. At this point, referring to the solid line in FIG. 9, the transmission module 902 may be understood as the sending module 902a.

Correspondingly, the processing module 901 is configured to: determine that the first destination address is compatible with carrier aggregation when all transmission attributes (Tx profiles) associated with the first destination address correspond to being compatible with carrier aggregation; or determine that the first destination address is incompatible with carrier aggregation when at least one transmission profile associated with the first destination address corresponds to being incompatible with carrier aggregation; where the first destination address is a destination address for a first service, and the first service is a broadcast service or a multicast service.

In some possible embodiments, the transmission attribute is used to indicate that the broadcast service or the multicast service is compatible with carrier aggregation or incompatible with carrier aggregation.

In some possible embodiments, the transmission attributes are set at the granularity of service types, or at the granularity of destination addresses.

In some possible embodiments, in response to setting transmission attributes at the granularity of service types, one transmission attribute is associated with one service type, and at least one service type is associated with one destination address.

In some possible embodiments, all transmission attributes associated with the first destination address include: transmission attributes associated with all service types associated with the first destination address.

In some possible embodiments, in response to setting the transmission attribute at the granularity of destination address, one transmission attribute is associated with one destination address.

In some possible embodiments, one or more transmission attributes are associated with one destination address, where the one or more transmission attributes include a transmission attribute indicating compatibility with carrier aggregation and/or a transmission attribute indicating incompatibility with carrier aggregation.

In some possible embodiments, the processing module 901 is further configured to determine that any first destination address is compatible with carrier aggregation; and the sending module 902a is configured to simultaneously send data of one or more first services on a plurality of carriers.

In some possible embodiments, the processing module 901 is further configured to determine that all first destination addresses are incompatible with carrier aggregation; and the sending module 902a is configured to transmit data of one or more first services on a single carrier.

In some possible embodiments, the processing module 901 is further configured to determine that all first destination addresses are compatible with carrier aggregation; and the sending module 902a is configured to simultaneously transmit data of one or more first services on a plurality of carriers.

In some possible embodiments, the processing module 901 is further configured to determine that any first destination address is incompatible with carrier aggregation; and the sending module 902a is configured to transmit data of one or more first services on a single carrier.

In some possible embodiments, the above communication apparatus may be a receiving device or a chip or a system-on-chip in the receiving device in a sidelink communication system, and may also be a functional module in the receiving device that implements the methods of the various embodiments described above. The communication apparatus may fulfill the functions executed by the receiving device in the various embodiments described above, and these functions may be implemented through hardware executing corresponding software. These hardware or software includes one or more modules corresponding to the above functions. At this point, referring to the dashed line in FIG. 9, the transmission module 902 may be understood as a receiving module 902b.

Correspondingly, the processing module 901 is configured to: determine that the second destination address is compatible with carrier aggregation when all the transmission attributes associated with the second destination address correspond to being compatible with carrier aggregation; or determine that the second destination address is incompatible with carrier aggregation when at least one transmission attribute associated with the second destination address corresponds to being incompatible with carrier aggregation; where the second destination address is a destination address of a second service of interest, and the second service is a broadcast service or a multicast service.

In some possible embodiments, the transmission attribute is used to indicate that the broadcast service or multicast service is compatible with carrier aggregation or incompatible with carrier aggregation.

In some possible embodiments, the transmission attributes are set according to the granularity of service types, or according to the granularity of destination addresses.

In some possible embodiments, in response to transmission attributes being set according to the granularity of service types, one transmission attribute is associated with one service type, and at least one service type is associated with one destination address.

In some possible embodiments, all the transmission attributes associated with the second destination address include: transmission attributes associated with all the service types associated with the second destination address.

In some possible embodiments, in response to setting the transmission attribute according to the granularity of destination addresses, one transmission attribute is associated with one destination address.

In some possible embodiments, one or more transmission attributes are associated with one destination address, where the one or more transmission attributes include a transmission attribute indicating compatibility with carrier aggregation and/or a transmission attribute indicating incompatibility with carrier aggregation.

In some possible embodiments, the processing module 901 is further configured to determine that any second destination address is compatible with carrier aggregation; and the receiving module 902b is configured to simultaneously receive data of one or more second services on a plurality of carriers.

In some possible embodiments, the processing module 901 is further configured to determine that all second destination addresses are incompatible with carrier aggregation; and the receiving module 902b is configured to receive data of one or more second services on a single carrier.

In some possible embodiments, the processing module 901 is further configured to determine that all second destination addresses are compatible with carrier aggregation; and the receiving module 902b is configured to simultaneously receive data of one or more second services on a plurality of carriers.

In some possible embodiments, the processing module 901 is further configured to determine that any second destination address is incompatible with carrier aggregation; and the receiving module 902b is configured to receive data of one or more second services on a single carrier.

It should be noted that the specific implementation processes of the processing module 901 and the transmission module 902 may be referred to the detailed descriptions of the transmitting device and the receiving device in the embodiments shown in FIG. 2 to 8. For the sake of brevity of the specification, details are not repeated here.

In the embodiments of the present disclosure, the receiving module 902b may be a receiving interface, a receiving circuit, or a receiver, etc., and the sending module 902a may be a transmitting interface, a transmitting circuit, or a transmitter, etc.; and the processing module 901 may be one or more processors.

Based on the same inventive concept, the embodiments of the present disclosure provide a communication device, which may be the transmitting device and/or the receiving device described in one or more of the above embodiments. FIG. 10 is a schematic structural diagram of a communication device in an embodiment of the present disclosure. Referring to FIG. 10, the communication device 100 adopts general-purpose computer hardware, including a processor 101, a memory 102, a bus 103, an input device 104, and an output device 105.

In some possible embodiments, the memory 102 may include computer storage media in the form of volatile and/or non-volatile memory, such as read-only memory and/or random access memory. The memory 102 may store an operating system, application programs, other program modules, executable code, program data, user data, and the like.

The input device 104 may be used to input commands and information into the communication device. The input device 104, such as a keyboard or a pointing device, may be a mouse, a trackball, a touchpad, a microphone, a joystick, a game pad, a satellite TV antenna, a scanner, or a similar device. These input devices may be connected to processor 101 via the bus 103.

The output device 105 may be used for the communication device to output information. In addition to a monitor, the output device 105 may also be other peripheral output devices, such as speakers and/or printing devices. These output devices may also be connected to the processor 101 through the bus 103.

The communication device may be connected to a network, such as a local area network (LAN), through the antenna 106. In a networked environment, the computer execution instructions stored in the control device may be stored in a remote storage device, rather than being limited to local storage.

When the processor 101 in the communication device executes the executable code or application programs stored in the memory 102, the communication device executes the mobility management configuration method on the terminal device side or the network device side in the above embodiments. The specific execution process is described in the above embodiments and will not be repeated here.

In addition, the above memory 102 stores computer executable instructions for implementing the functions of the processing module 901 and the transmission module 902 in FIG. 9. The functions/implementation processes of the processing module 901 and the transmission module 902 in FIG. 9 may all be implemented by the processor 101 in FIG. 10 calling the computer executable instructions stored in the memory 102. For specific implementation processes and functions, reference can be made to the above relevant embodiments.

Based on the same inventive concept, the embodiments of the present disclosure provide a terminal device. This terminal device is consistent with the terminal devices such as the transmitting-end terminal device, the transmitting-end user equipment, the receiving-end terminal device, and the receiving-end user equipment in the above one or more embodiments. Optionally, the terminal device may be a mobile phone, a computer, a digital broadcast terminal device, a messaging device, a gaming console, a tablet, a medical device, exercise equipment, a personal digital assistant, and the like.

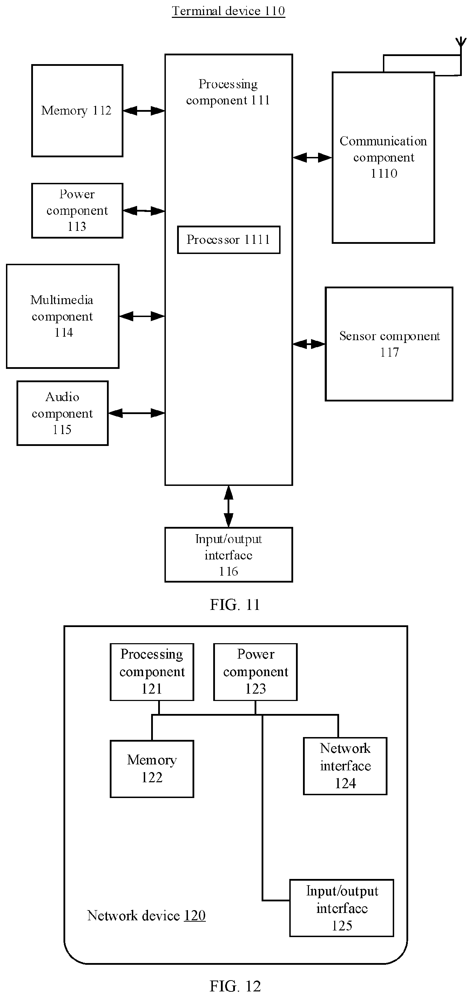

Fig. 11 is a structural schematic diagram of a terminal device in the embodiments of the present disclosure. Referring to FIG. 11, the terminal device 110 may include one or more of the following components: a processing component 111, a memory 112, a power component 113, a multimedia component 114, an audio component 115, an input/output (I/O) interface 116, a sensor component 117, and a communication component 118.

The processing component 111 typically controls overall operations of the terminal device 110, such as the operations associated with display, telephone calls, data communications, camera operations, and recording operations. The processing component 111 may include one or more processors 820 to execute instructions to perform all or part of the steps in the above described methods. Moreover, the processing component 111 may include one or more modules which facilitate the interaction between the processing component 111 and other components. For instance, the processing component 111 may include a multimedia module to facilitate the interaction between the multimedia component 114 and the processing component 111.

The memory 112 is configured to store various types of data to support the operation of the terminal device 110. Examples of such data include instructions for any applications or methods operated on the terminal device 110, contact data, phonebook data, messages, pictures, video, etc. The memory 112 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 113 provides power to various components of the terminal device 110. The power component 113 may include a power management system, one or more power sources, and any other components associated with the generation, management, and distribution of power in the terminal device 110.

The multimedia component 114 includes a screen providing an output interface between the terminal device 110 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 114 includes a front camera and/or a rear camera. The front camera and the rear camera may receive an external multimedia datum while the terminal device 110 is in an operation mode, such as a photographing mode or a video mode. Each of the front camera and the rear camera may be a fixed optical lens system or have focus and optical zoom capability.

The audio component 115 is configured to output and/or input audio signals. For example, the audio component 115 includes a microphone ("MIC") configured to receive an external audio signal when the terminal device 110 is in an operation mode, such as a call mode, a recording mode, and a voice recognition mode. The received audio signal may be further stored in the memory 112 or transmitted via the communication component 118. In some embodiments, the audio component 115 further includes a speaker to output audio signals.

The I/O interface 116 provides an interface between the processing component 111 and peripheral interface modules, such as a keyboard, a click wheel, buttons, and the like. The buttons may include, but are not limited to, a home button, a volume button, a starting button, and a locking button.

The sensor component 117 includes one or more sensors to provide status assessments of various aspects of the terminal device 110. For instance, the sensor component 117 may detect an open/closed status of the terminal device 110, relative positioning of components, e.g., the display and the keypad, of the terminal device 110, a change in position of the terminal device 110 or a component of the terminal device 110, a presence or absence of user contact with the terminal device 110, an orientation or an acceleration/deceleration of the terminal device 110, and a change in temperature of the terminal device 110. The sensor component 117 may include a proximity sensor configured to detect the presence of nearby objects without any physical contact. The sensor component 117 may also include a light sensor, such as a CMOS or CCD image sensor, for use in imaging applications. In some embodiments, the sensor component 117 may also include an accelerometer sensor, a gyroscope sensor, a magnetic sensor, a pressure sensor, or a temperature sensor.

The communication component 118 is configured to facilitate communication, wired or wirelessly, between the terminal device 110 and other devices. The terminal device 110 can access a wireless network by using a communication standard, such as WiFi, 2G, 3G, 4G, or 5G, or a combination thereof. In one exemplary embodiment, the communication component 118 receives a broadcast signal or broadcast associated information from an external broadcast management system via a broadcast channel. In one exemplary embodiment, the communication component 118 further includes a near field communication (NFC) module to facilitate short-range communications. For example, the NFC module may be implemented by using a radio frequency identification (RFID) technology, an infrared data association (IrDA) technology, an ultra-wideband (UWB) technology, a Bluetooth (BT) technology, and other technologies.

In exemplary embodiments, the terminal device 110 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

Based on the same inventive concept, the embodiments of the present disclosure provide a network device, which is consistent with the network devices such as the transmitting-end network device and the receiving-end network device in one or more of the above embodiments.

FIG. 12 is a structural schematic diagram of a network device in the embodiments of the present disclosure. Referring to FIG. 12, the network device 120 may include a processing component 121, which further includes one or more processors, and a memory resource represented by a memory 122 for storing instructions executable by the processing component 121, such as an application program. The application program stored in the memory 122 may include one or more modules, each corresponding to a set of instructions. In addition, the processing component 121 is configured to execute instructions to perform any of the above methods applied to the network device as described above.

The network device 120 may further include a power component 123 configured to perform power management of the network device 120, a wired or wireless network interface 124 configured to connect the network device 120 to a network, and an input/output (I/O) interface 125. The network device 120 may operate based on an operating system stored in the memory 122, such as a Windows Server^{™}, a Mac OS X^{™}, a Unix^{™}, a Linux^{™}, a Free BSD^{™} or the like.

Based on the same inventive concept, a terminal device includes: an antenna; a memory; and a processor, which is connected to the antenna and the memory respectively, and configured to control the transmission and reception of the antenna by executing the computer-executable instructions stored on the memory, and can implement the method on the transmitting device side as described in one or more of the above embodiments.

Based on the same inventive concept, a network device includes: an antenna; a memory; and a processor, which is connected to the antenna and the memory respectively and configured to control the transmission and reception of the antenna by executing computer-executable instructions stored on the memory, and can implement the method on the receiving device side as described in one or more of the above embodiments.

Based on the same inventive concept, the embodiments of the present disclosure also provide a computer-readable storage medium, in which instructions are stored; when the instructions run on a computer, they are used to execute the methods on the transmitting device side or the receiving device side in one or more of the above embodiments.

Based on the same inventive concept, the embodiments of the present disclosure also provide a computer program or a computer program product. When the computer program product is executed on a computer, it enables the computer to implement the methods on the transmitting device side or the receiving device side in one or more of the above embodiments.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure.

It will be appreciated that the present disclosure is not limited to the exact construction that has been described above and illustrated in the accompanying drawings, and various modifications and changes can be made without departing from the scope thereof.

## Claims

1. A sidelink communication method, applied to a transmitting device, the method comprising:
in a case that all transmission attributes associated with a first destination address correspond to being compatible with carrier aggregation, determining that the first destination address is compatible with the carrier aggregation; and
in a case that at least one transmission attribute associated with the first destination address corresponds to being incompatible with the carrier aggregation, determining that the first destination address is incompatible with the carrier aggregation;
wherein the first destination address is a destination address of a first service, and the first service is a broadcast service or a multicast service.

2. The method according to claim 1, wherein the transmission attribute indicates whether the broadcast service or the multicast service is compatible with the carrier aggregation.

3. The method according to claim 1 or 2, wherein the transmission attribute is set according to a granularity of service type, or the transmission attribute is set according to a granularity of destination address.

4. The method according to claim 3, wherein in response to the transmission attribute being set according to the granularity of service type, one transmission attribute is associated with one service type, and at least one service type is associated with one destination address.

5. The method according to claim 4, wherein the all transmission attributes associated with the first destination address comprise: a transmission attribute associated with all service types associated with the first destination address.

6. The method according to claim 3, wherein in response to the transmission attribute being set according to the granularity of destination address, one transmission attribute is associated with one destination address.

7. The method according to claim 1, wherein one or more transmission attributes are associated with one destination address, and wherein the one or more transmission attributes comprise a transmission attribute indicating compatibility with the carrier aggregation and/or a transmission attribute indicating incompatibility with the carrier aggregation.

8. The method according to claim 1 or 2, wherein the method further comprises:
determining that any of the first destination address is compatible with the carrier aggregation; and
transmitting data of one or more first services simultaneously on a plurality of carriers.

9. The method according to claim 8, wherein the method further comprises:
determining that all of the first destination address is incompatible with the carrier aggregation; and
transmitting the data of one or more first services on a single carrier.

10. The method according to claim 1 or 2, wherein the method further comprises:
determining that all of the first destination address is compatible with the carrier aggregation; and
transmitting data of one or more first services simultaneously on a plurality of carriers.

11. The method according to claim 10, wherein the method further comprises:
determining that any of the first destination address is incompatible with the carrier aggregation; and
transmitting the data of one or more first services on a single carrier.

12. A sidelink communication method, applied to a receiving device, the method comprising:
in a case that all transmission attributes associated with a second destination address correspond to being compatible with carrier aggregation, determining that the second destination address is compatible with the carrier aggregation; and
in a case that at least one transmission attribute associated with the second destination address corresponds to being incompatible with the carrier aggregation, determining that the second destination address is incompatible with the carrier aggregation;
wherein the second destination address is a destination address of a second service of interest, and the second service is a broadcast service or a multicast service.

13. The method according to claim 12, wherein the transmission attribute indicates whether the broadcast service or the multicast service is compatible with the carrier aggregation.

14. The method according to claim 12 or 13, wherein the transmission attribute is set according to a granularity of service type, or the transmission attribute is set according to a granularity of destination address.

15. The method according to claim 14, wherein in response to the transmission attribute being set according to the granularity of service type, one transmission attribute is associated with one service type, and at least one service type is associated with one destination address.

16. The method according to claim 15, wherein the all transmission attributes associated with the second destination address comprise: a transmission attribute associated with all service types associated with the second destination address.

17. The method according to claim 14, wherein in response to the transmission attribute being set according to the granularity of destination address, one transmission attribute is associated with one destination address.

18. The method according to claim 12, wherein one or more transmission attributes are associated with one destination address, and wherein the one or more transmission attributes comprise a transmission attribute indicating compatibility with the carrier aggregation and/or a transmission attribute indicating incompatibility with the carrier aggregation.

19. The method according to claim 12 or 13, wherein the method further comprises:
determining that any of the second destination address is compatible with the carrier aggregation; and
receiving data of one or more second services simultaneously on a plurality of carriers.

20. The method according to claim 19, wherein the method further comprises:
determining that all of the second destination address is incompatible with the carrier aggregation; and
receiving the data of one or more second services on a single carrier.

21. The method according to claim 12 or 13, wherein the method further comprises:
determining that all of the second destination address is compatible with the carrier aggregation; and
receiving data of one or more second services simultaneously on a plurality of carriers.

22. The method according to claim 21, wherein the method further comprises:
determining that any of the second destination address is incompatible with carrier aggregation; and
receiving the data of one or more second services on a single carrier.

23. A communication apparatus, applied to a transmitting device, the apparatus comprising:
a processing module, configured to: determine that a first destination address is compatible with carrier aggregation in a case that all transmission attributes associated with the first destination address correspond to being compatible with the carrier aggregation; or determine that the first destination address is incompatible with the carrier aggregation in a case that at least one transmission attribute associated with the first destination address corresponds to being incompatible with the carrier aggregation; wherein the first destination address is a destination address of a first service, and the first service is a broadcast service or a multicast service.

24. A sidelink receiving apparatus, applied to a receiving device, the apparatus comprising:
a processing module, configured to: determine that a second destination address is compatible with carrier aggregation in a case that all transmission attributes associated with the second destination address correspond to being compatible with the carrier aggregation; or determine that the second destination address is incompatible with the carrier aggregation in a case that at least one transmission attribute associated with the second destination address corresponds to being incompatible with the carrier aggregation; wherein the second destination address is a destination address of a second service of interest, and the second service is a broadcast service or a multicast service.

25. A communication device, comprising: an antenna; a memory; and a processor, wherein the processor is respectively connected to the antenna and the memory and configured to control a transmission and reception of the antenna by executing computer-executable instructions stored on the memory, and implement the method according to any one of claims 1 to 22.

26. A computer storage medium, wherein the computer-readable storage medium stores instructions that, when executed on a computer, are configured to perform the method according to any one of claims 1 to 22.
